# EUROPEAN PATENT APPLICATION

(11) **EP 4 815 424 A1**
(43) Date of publication of application: **30.09.2026**
(21) Application number: 25197077.8
(22) Date of filing: 20.08.2025
(51) Int. Cl.: H04N 1/00, G06F 3/12

(54) **INFORMATION PROCESSING SYSTEM, INFORMATION PROCESSING PROGRAM, AND METHOD**

(30) Priority: 25.03.2025 JP 2025050588
(71) Applicant: FUJIFILM Business Innovation Corp., Minato-ku Tokyo (JP)
(72) Inventor: ISHIJIMA, Hiroyasu, Yokohama-shi (JP)
(74) Representative: Haseltine Lake Kempner LLP

(57) **Abstract**

An information processing system includes: a processor, and the processor is configured to: determine whether preceding print data on which a RIP process precedingly starts is data in a page-independent format in a case where interrupt print data is acquired; and allocate one or more RIP process mechanisms among multiple RIP process mechanisms that share the RIP process on the preceding print data in parallel to a RIP process on the interrupt print data and allocate another or more RIP process mechanisms among the multiple RIP process mechanisms to continuation of the RIP process on the preceding print data in a case where the preceding print data is not the data in the page-independent format.

## Description

### Background

### (i) Technical Field

The disclosure relates to an information processing system, an information processing program, and a method.

### (ii) Related Art

A printer that interprets a print job from a communicable, external information processing apparatus and that prints based on data after the interpretation is disclosed in Japanese Unexamined Patent Application Publication No. 2005-349768, and the printer includes a recognition unit that recognizes an interrupting instruction for a print job from the information processing apparatus, an interruption unit that cancels a print process for a preceding print job other than the print job and that performs the print process for the print job of the interrupting instruction in a case where the recognition unit recognizes the interrupting instruction, and a restoring unit that resumes printing in the preceding print job after the interruption unit performs the print process. The restoring unit includes a unit that skips interpretation of a page for which an ending page instruction is received regarding data of the preceding print job that has been already interpreted, based on a data size and that interprets remaining data.

A printer control apparatus that includes a first storage unit that sequentially stores document data that is expressed by using a page description language that has page independency, a production unit that produces a page sequence of the document data that is sequentially read from the first storage unit, and an encoding unit that encodes the document data into image data, based on the page sequence that is produced by the production unit is disclosed in Japanese Unexamined Patent Application Publication No. 6-103005, and the printer control apparatus also includes a second storage unit that stores information about the state of suspension including information about a processed page, and a controller that, when interrupt printing is requested, suspends processing per page, changing an order of reading interrupt document data into the first after the information about the state of suspension is stored in the second storage unit, controls the production unit and the encoding unit such that the page sequence of the interrupt document data is produced, and an encoding process into the image data is performed, and resumes a print process on the suspended document data by controlling the production unit and the encoding unit, based on the information about the state of suspension that is stored in the second storage unit after the process ends.

An image forming apparatus that is capable of performing an interrupt printing process to start a process for an interrupt job that is instructed while a job to be interrupted is being performed in response to an interrupt printing instruction is disclosed in Japanese Unexamined Patent Application Publication No. 2012-11602, and the image forming apparatus includes a generation unit that performs a RIP process on a print job having at least a page and that generates image data, a print unit that performs a print process, based on the image data that is generated by the generation unit, and a controller that controls the print unit such that in the case where a RIP process on a page that is included in the interrupt job by using the generation unit ends, the print process on the job to be interrupted is suspended, and the print process on the interrupt job starts.

### Summary

In some cases, a RIP process on preceding print data that precedingly starts is suspended, and a RIP process on interrupt print data is performed. In the case where the preceding print data is not randomly accessible because the preceding print data is not data in a page-independent format, it is necessary to perform a predetermined process from the beginning of the preceding print data to a page at which the RIP process is resumed in order to resume the RIP process that is suspended once.

Also in the case where multiple RIP process mechanisms share the RIP process on the preceding print data in parallel, and the RIP process on the preceding print data is suspended and resumed, the RIP process mechanisms need a predetermined process from the beginning of the preceding print data to the page at which the RIP process is resumed.

In some cases where the RIP process on the interrupt print data is thus performed during the RIP process on the preceding print data, productivity until the RIP process on the preceding print data ends is reduced.

Accordingly, it is an object of the present disclosure to mitigate a reduction in productivity due to a RIP process on interrupt print data that is performed during a RIP process on preceding print data unlike the case where the RIP process on the preceding print data is suspended, and the RIP process on the interrupt print data is performed.

According to a first aspect of the present disclosure, there is provided an information processing system including: a processor, and the processor is configured to: determine whether preceding print data on which a RIP process precedingly starts is data in a page-independent format in a case where interrupt print data is acquired; and allocate one or more RIP process mechanisms among a plurality of RIP process mechanisms that share the RIP process on the preceding print data in parallel to a RIP process on the interrupt print data and allocate another or more RIP process mechanisms among the plurality of RIP process mechanisms to continuation of the RIP process on the preceding print data in a case where the preceding print data is not the data in the page-independent format.

According to a second aspect of the present disclosure, there is provided the information processing system according to the first aspect in which the processor is configured to: display a screen on which a setting value relevant to a number of the one or more RIP process mechanisms that are allocated to the RIP process on the interrupt print data is received; and refer to the setting value and determine the number of the one or more RIP process mechanisms that are allocated to the RIP process on the interrupt print data among the plurality of RIP process mechanisms.

According to a third aspect of the present disclosure, there is provided the information processing system according to the first aspect in which the processor is configured to: display a screen on which an input of a priority of interrupt printing is received; and determine a number of the one or more RIP process mechanisms that are allocated to the RIP process on the interrupt print data depending on the priority.

According to a fourth aspect of the present disclosure, there is provided the information processing system according to the first aspect in which the processor is configured to: determine a lower limit of a number of the other or more RIP process mechanisms that are allocated to the continuation of the RIP process on the preceding print data such that a predicted value of a page count when the RIP process on the preceding print data is performed per unit time is not smaller than a predicted value of a page count when the preceding print data is printed per unit time; and determine a number of the one or more RIP process mechanisms that are allocated to the RIP process on the interrupt print data.

According to a fifth aspect of the present disclosure, there is provided the information processing system according to any one of the second aspect to the fourth aspect in which the processor is configured to: determine that the number of the one or more RIP process mechanisms that are allocated to the RIP process on the interrupt print data is a number equal to or smaller than a page count of the interrupt print data in a case where the page count of the interrupt print data is smaller than a number of the plurality of RIP process mechanisms.

According to a sixth aspect of the present disclosure, there is provided the information processing system according to any one of the first aspect to the fifth aspect in which the processor is configured to: allocate the one or more RIP process mechanisms that are allocated to the RIP process on the interrupt print data to the continuation of the RIP process on the preceding print data in a case where the RIP process on the interrupt print data ends.

According to a seventh aspect of the present disclosure, there is provided an information processing program causing a computer to execute a process including: determining whether preceding print data on which a RIP process precedingly starts is data in a page-independent format in a case where interrupt print data is acquired; and allocating one or more RIP process mechanisms among a plurality of RIP process mechanisms that share the RIP process on the preceding print data in parallel to a RIP process on the interrupt print data and allocating another or more RIP process mechanisms among the plurality of RIP process mechanisms to continuation of the RIP process on the preceding print data in a case where the preceding print data is not the data in the page-independent format.

According to an eighth aspect of the present disclosure, there is provided a method including: determining whether preceding print data on which a RIP process precedingly starts is data in a page-independent format in a case where interrupt print data is acquired; and allocating one or more RIP process mechanisms among a plurality of RIP process mechanisms that share the RIP process on the preceding print data in parallel to a RIP process on the interrupt print data and allocating another or more RIP process mechanisms among the plurality of RIP process mechanisms to continuation of the RIP process on the preceding print data in a case where the preceding print data is not the data in the page-independent format.

As for the information processing system according to the first aspect, the information processing program according to the seventh aspect, and the method according to the eighth aspect, a reduction in productivity due to the RIP process on the interrupt print data that is performed during the RIP process on the preceding print data can be mitigated unlike the case where the RIP process on the preceding print data is suspended, and the RIP process on the interrupt print data is performed.

As for the information processing system according to the second aspect, the RIP process on the interrupt print data can be performed by one or more RIP process mechanisms the number of which depends on the received setting value.

As for the information processing system according to the third aspect, the RIP process on the interrupt print data can be performed by one or more RIP process mechanisms the number of which depends on the priority of interrupt printing that can be intuitively inputted.

As for the information processing system according to the fourth aspect, intermittent printing can be inhibited from occurring in the case where a RIP process on print data and a print process are performed as a series of processes.

As for the information processing system according to the fifth aspect, the number of the one or more RIP process mechanisms that are allocated to the RIP process on the interrupt print data can be equal to or smaller than the page count of the interrupt print data.

As for the information processing system according to the sixth aspect, the RIP process on the preceding print data can be shared and performed by an increased number of RIP process mechanisms after the RIP process on the interrupt print data ends unlike the case where the one or more RIP process mechanisms that are allocated to the RIP process on the interrupt print data are not allocated to the continuation of the RIP process on the preceding print data.

### Brief Description of the Drawings

Exemplary embodiments of the present disclosure will be described in detail based on the following figures, wherein:
Fig. 1 schematically illustrates an example of the structure of a print system;
Fig. 2 illustrates an example of a hardware configuration of an information processing system according to a first exemplary embodiment;
Fig. 3 illustrates an example of a functional configuration of the information processing system according to the first exemplary embodiment;
Fig. 4 illustrates an example of the flow of information processing that is performed by the information processing system according to the first exemplary embodiment;
Fig. 5 illustrates an example of a screen that is displayed when a setting value is received;
Fig. 6 illustrates an example of the information processing system that allocates a RIP process on interrupt print data and a RIP process on preceding print data to RIP process mechanisms;
Fig. 7 illustrates an example of a screen that is displayed when the input of a priority is received;
Fig. 8 illustrates an example of the flow of information processing that is performed by the information processing system according to a second exemplary embodiment;
Fig. 9 illustrates an example of the flow of information processing that is performed by the information processing system according to a third exemplary embodiment; and
Fig. 10 illustrates an example of an information processing system in a comparative example in which the RIP process on the preceding print data that precedingly starts is suspended, and the RIP process on the interrupt print data is performed.

### Detailed Description

An exemplary embodiment of a technique of the disclosure will hereinafter be described by way of example with reference to the drawings. Components and portions like or equivalent to those in the drawings are designated by like reference characters. Ratios of dimensions in the drawings are exaggerated for convenience of description and differ from actual ratios in some cases.

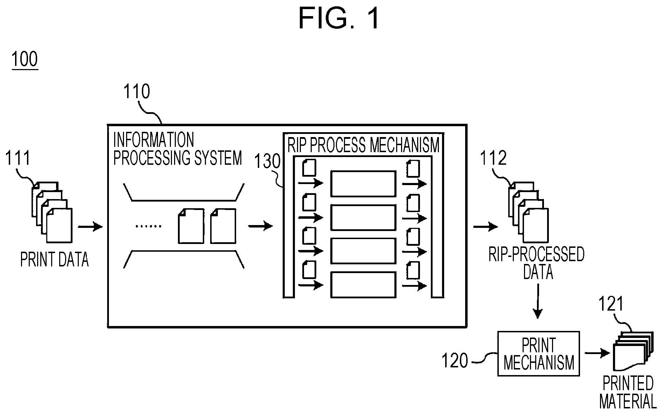

The structure of a print system will now be schematically described. Fig. 1 is referred here.

Fig. 1 schematically illustrates an example of the structure of a print system 100. The print system 100 includes an information processing system 110 and a print mechanism 120. Fig. 1 illustrates a scene where the information processing system 110 in the print system 100 acquires print data 111, and RIP-processed data 112 is outputted from the information processing system 110 to the print mechanism 120. Fig. 1 also illustrates a scene where the print mechanism 120 in the print system 100 performs a print process by using the RIP-processed data 112, and a printed material 121 is outputted from the print mechanism 120. Fig. 1 illustrates a scene where multiple RIP process mechanisms 130 in the information processing system 110 share a RIP process on the print data 111 in parallel. The information processing system 110 may include a spool for storing the RIP-processed data 112 although this is not illustrated.

The raster image processer (RIP) process described herein is a process of converting the print data into raster data in order to process the data into a format that is usable for printing.

The RIP process on the print data is classified into a process in a multi-page RIP method and a process in a multi-job RIP method. In the multi-page RIP method, multiple pages in a single job are RIP-processed by the multiple RIP process mechanisms, and in this way, the throughput of the single job may be improved. In the multi-job RIP method, multiple jobs are simultaneously RIP-processed in parallel, and in this way, the average throughput of the multiple jobs may be improved. In the case described in the present specification, the multi-page RIP method is used.

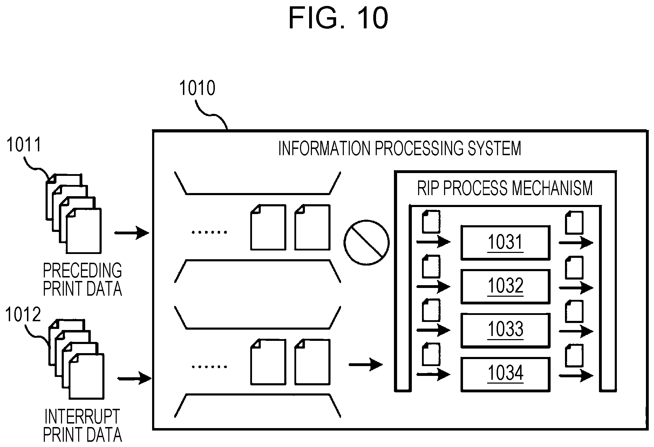

In some cases, another job that needs urgent print interrupts the RIP process that is being performed as illustrated in Fig. 1, particularly, the RIP process that is being performed on print data that needs a large page count such as printing of business forms. As illustrated in Fig. 10 described later, in the case where interrupt printing is requested in the multi-page RIP method, a RIP process for a print job that has already started is suspended, and a RIP process for an interrupt job is performed.

The print data described herein is classified into data in a page-independent format and data in a non-page-independent format. Examples of the data in the page-independent format include that of a portable document format (PDF) file or a printer command language (PCL) file. A desired print page regarding the data in the page-independent format and a resource that is embedded in a job are randomly accessible. Examples of the data in the non-page-independent format include that of a PostScript file. In the case where the data in the non-page-independent format is processed, the data needs to be sequentially processed from the beginning of the data to the desired page.

As for the data in the page-independent format, even when the RIP process is suspended due to the occurrence of interrupt printing, the RIP process may be resumed from the page to be resumed. As for the data is not in the page-independent format, however, random access is impossible, and accordingly, it is necessary to perform a predetermined process again from the beginning of the print data in the case where the process is suspended due to the occurrence of interrupt printing and resumed. In some cases, after part of the print data on which the RIP process has been already performed, the RIP process is performed again, or a simplified process is performed. In any case, these processes are performed because the RIP process is suspended. Examples of the processes that are performed because the RIP process is suspended include interpretation of a resource (such as a form or a font) that is written at the beginning of a job, data loading, identification of a page range, or a scan process for skipping to a predetermined page. These processes need a great amount of time and reduces productivity.

In the description, the information processing system 110 includes a single device but may include multiple devices.

### First Exemplary Embodiment

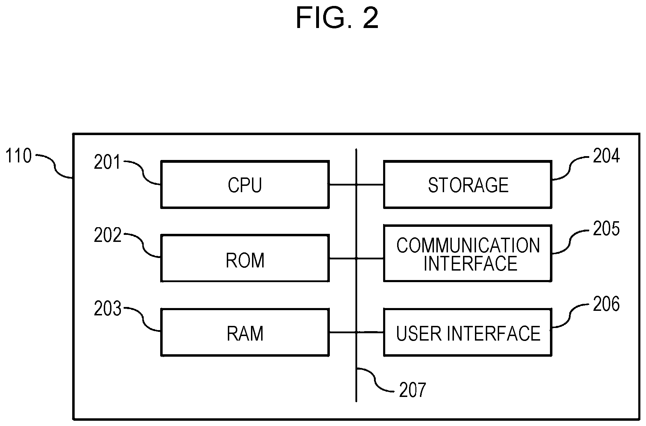

A hardware configuration of the information processing system 110 according to a first exemplary embodiment will now be described. Fig. 2 is referred herein.

Fig. 2 illustrates an example of the hardware configuration of the information processing system 110 according to the first exemplary embodiment. The information processing system 110 includes a CPU 201, a read only memory (ROM) 202, a random access memory (RAM) 203, a storage 204, a communication interface 205, and a user interface 206. These components are connected so as to be communicable with each other with a bus 207 interposed therebetween.

The CPU 201 runs various programs and controls the components. The ROM 202 stores various programs and various kinds of data. The RAM 203 serves as a work area and temporarily stores a program or data. The storage 204 includes a hard disk drive (HDD) or a solid state drive (SSD) and stores various programs including an operating system and various kinds of data.

As for the information processing system 110 according to the present exemplary embodiment, an information processing program is stored in the ROM 202 or the storage 204. The CPU 201 reads the information processing program from the ROM 202 or the storage 204 and runs the information processing program with the RAM 203 used as the work area, and consequently implements control of the components and various calculations in accordance with the information processing program.

The communication interface 205 is an interface for the information processing system 110 to communicate with another device. The user interface 206 is an input-output interface for the information processing system 110 to exchange information with the user. The user interface 206 includes an input device such as a touch screen, a keyboard or a microphone and an output device such as a monitor or a speaker. The user interface 206 may be a specific example of a monitor that displays a screen on which the input of a "setting value" or a "priority" described later is received.

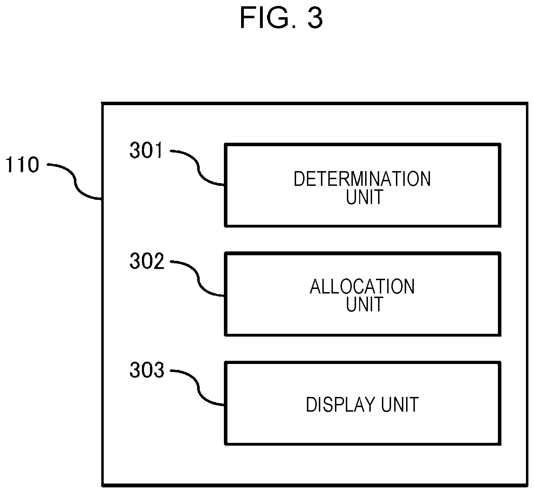

A functional configuration of the information processing system according to the first exemplary embodiment will now be described. Fig. 3 is referred here.

Fig. 3 illustrates an example of the functional configuration of the information processing system 110 according to the first exemplary embodiment. The information processing system 110 includes, as the functional configuration, a determination unit 301, an allocation unit 302, and a display unit 303.

In the case where interrupt print data is acquired, the determination unit 301 determines whether preceding print data on which a RIP process precedingly starts is the data in the page-independent format.

In the case where the preceding print data is not the data in the page-independent format, the allocation unit 302 allocates one or more RIP process mechanisms among the multiple RIP process mechanisms that share the RIP process on the preceding print data in parallel to a RIP process on the interrupt print data and allocates another or more RIP process mechanisms among the multiple RIP process mechanisms to the continuation of the RIP process on the preceding print data. The concept of the allocation may include allocation of a page range that is shared by each RIP process mechanism.

In the case where the RIP process on the interrupt print data ends, the allocation unit 302 allocates the one or more RIP process mechanisms that are allocated to the RIP process on the interrupt print data to the continuation of the RIP process on the preceding print data.

The display unit 303 displays a screen on which the input of the setting value relevant to the number of the one or more RIP process mechanisms that are allocated to the RIP process on the interrupt print data or the priority of interrupt printing is received.

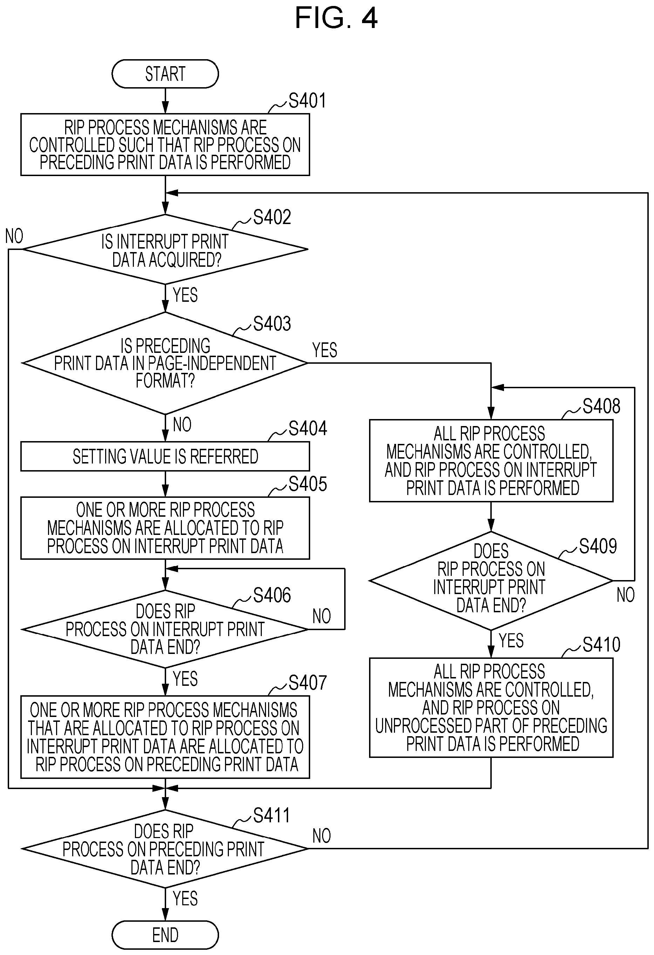

The flow of information processing that is performed by the information processing system according to the first exemplary embodiment will now be described. Fig. 4 is referred here.

Fig. 4 illustrates an example of the flow of information processing that is performed by the information processing system 110 according to the first exemplary embodiment. The CPU 201 reads the information processing program from the ROM 202 or the storage 204 into the RAM 203 and runs the information processing program, and the present flow consequently proceeds.

At step S401, the CPU 201 serves as the allocation unit 302 and controls the multiple RIP process mechanisms such that the RIP process on print data is shared and performed in parallel.

The print data described herein is a print job. For example, as illustrated in Fig. 1, the RIP-process on the print data that is acquired per job is performed in the multi-page RIP method. The print data on which the RIP-process is performed may be printed after being stored in the spool or may be sequentially printed without the spool. The "preceding print data on which the RIP process precedingly starts" mentioned for a step described later represents the print data on which the RIP process starts at step S401.

Subsequently, at step S402, the CPU 201 serves as the determination unit 301 and determines whether the interrupt print data is acquired. Whether interrupt printing is requested may be determined. In the case where the interrupt print data is acquired, not only printing but also the RIP process that is a pre-printing process may be prioritized.

In the case where it is not determined that the interrupt print data is acquired, the CPU 201 performs a process at step S411. In the case where it is determined that the interrupt print data is acquired, the CPU 201 performs a process at step S403.

At step S403, the CPU 201 serves as the determination unit 301 and determines whether the preceding print data on which the RIP process precedingly starts is the data in the page-independent format. Whether the preceding print data is the data in the page-independent format may be determined in a manner in which the print data is analyzed. In the case where the preceding print data is not the data in the page-independent format, the RIP process mechanisms need the predetermined process again in order to suspend and resume the RIP process at a predetermined page. For this reason, processing branches depending on whether the data format of the preceding print data is the page-independent format.

In the case where it is determined that the preceding print data is not the data in the page-independent format, the CPU 201 performs a process at step S404. In the case where it is determined that the preceding print data is the data in the page-independent format, the CPU 201 performs a process at step S408.

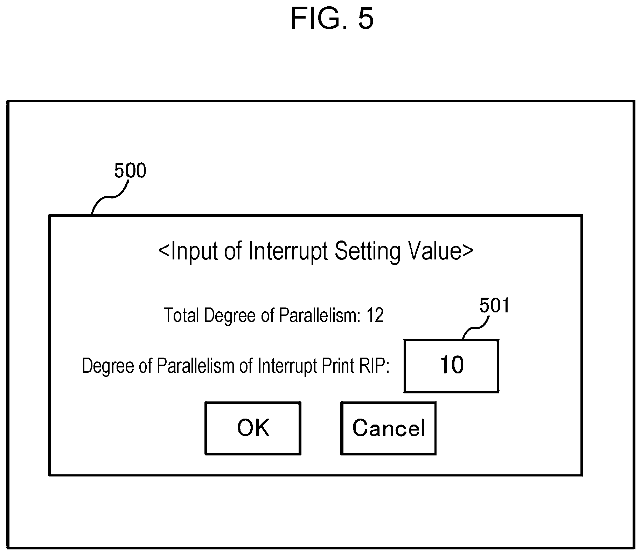

At step S404, the CPU 201 serves as the allocation unit 302 and refers the setting value. The setting value is relevant to the number of the one or more RIP process mechanisms that are allocated to the RIP process on the interrupt print data. The setting value may be a predetermined value or a value that is inputted from the user. For example, the setting value may be a value that is inputted by the user on a screen displayed as illustrated in Fig. 5 described later. The setting value may be a value that satisfies an upper limit or a lower limit that is determined according to a second exemplary embodiment described later.

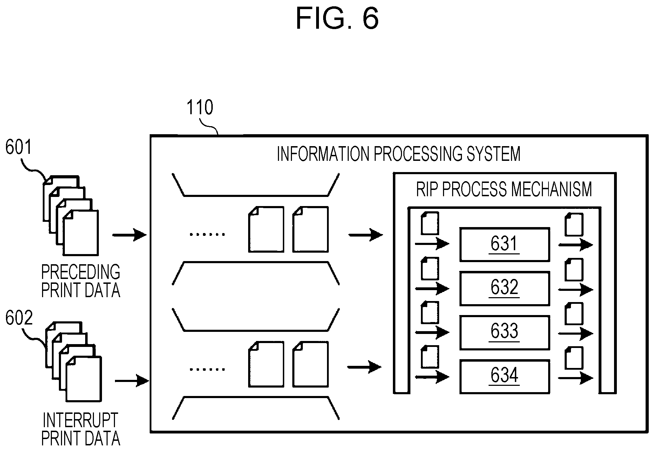

Subsequently, at step S405, the CPU 201 serves as the allocation unit 302 and allocates the one or more RIP process mechanisms among the multiple RIP process mechanisms that share the RIP process on the preceding print data in parallel to the RIP process on the interrupt print data. The CPU 201 serves as the allocation unit 302 and allocates the other or more RIP process mechanisms among the multiple RIP process mechanisms to the continuation of the RIP process on the preceding print data. Specifically, the CPU 201 serves as the allocation unit 302 and may determine the number of the one or more RIP process mechanisms that are allocated to the RIP process on the interrupt print data depending on the setting value that is referred at step S404. For example, as illustrated in Fig. 6 described later, a RIP process mechanism 631 among four RIP process mechanisms 631 to 634 may be allocated to the continuation of the RIP process on preceding print data 601, and the three RIP process mechanisms 632 to 634 may be allocated to the RIP process on interrupt print data 602.

The number of the other or more RIP process mechanisms that perform the RIP process on the preceding print data decreases while the RIP process on the interrupt print data is performed, and accordingly, the performance of the RIP process relevant to the preceding print data is less than that in the case where the RIP process for interruption of the interrupt print data is not performed. While and after the RIP process on the interrupt print data is performed, however, the other or more RIP process mechanisms continue the RIP process on the preceding print data. As for the other or more RIP process mechanisms that are allocated to the continuation of the RIP process on the preceding print data, it is not necessary to perform the predetermine process that is needed in the case where the RIP process on the preceding print data is suspended and resumed. In this way, a reduction in the productivity until the RIP process on the preceding print data ends may be mitigated while the RIP process on the interrupt print data is performed. It may be thought that the reduction in the productivity described herein is that a time required for the RIP process on the preceding print data is longer than that in the case where the RIP process for interruption of the interrupt print data is not performed.

Subsequently, at step S406, the CPU 201 serves as the allocation unit 302 and determines whether the RIP process on the interrupt print data ends.

Until it is determined that the RIP process on the interrupt print data ends, the CPU 201 continues performing a process of controlling the RIP process mechanisms such that the RIP process is performed in accordance with the allocation at step S405. In the case where it is determined that the RIP process on the interrupt print data ends, the CPU 201 performs a process at step 407.

At step S407, the CPU 201 serves as the allocation unit 302 and allocates the one or more RIP process mechanisms that are allocated to the RIP process on the interrupt print data to the continuation of the RIP process on the preceding print data. For example, the RIP process mechanisms 632 to 634 in Fig. 6 described later are controlled so as to share the RIP process on the preceding print data 601 again.

The one or more RIP process mechanisms that are allocated to the RIP process on the interrupt print data need the predetermined process for resuming the RIP process on the preceding print data. However, the reduction in the productivity until the RIP process on the preceding print data ends may be mitigated unlike the case where all of the RIP process mechanisms suspend and resume the RIP process on the preceding print data.

The number of the RIP process mechanisms that share the RIP process on the preceding print data is larger than that in the case where the one or more RIP process mechanisms that are allocated to the RIP process on the interrupt print data do not resume the RIP process on the preceding print data. In this way, the reduction in the productivity until the RIP process on the preceding print data ends may be mitigated. After the process at step S407 ends, the CPU 201 performs the process at step S411.

At step S408, the CPU 201 serves as the allocation unit 302 and controls the RIP process mechanisms that perform the RIP process on the preceding print data such that the RIP process on the preceding print data is suspended, and the RIP process on the interrupt print data is shared and performed. When the preceding print data is in the page-independent format, the predetermined process described above is not performed in the case of suspension and resumption. In this way, the RIP process on the interrupt print data may be performed with priority.

At step S409, the CPU 201 serves as the allocation unit 302 and determines whether the RIP process on the interrupt print data ends.

The CPU 201 continues performing the process at step S408 until it is determined that the RIP process on the interrupt print data ends. In the case where it is determined that the RIP process on the interrupt print data ends, the CPU 201 performs a process at step S410.

At step S410, the CPU 201 serves as the allocation unit 302 and controls the RIP process mechanisms that perform the RIP process on the interrupt print data such that the RIP process on unprocessed part of the preceding print data is performed. After the process at step S410 ends, the CPU 201 performs the process at step S411.

At step S411, the CPU 201 serves as the determination unit 301 and determines whether the RIP process on the preceding print data ends.

In the case where it is not determined that the RIP process on the preceding print data ends, the CPU 201 performs the process at step S402 again. In the case where it is determined that the RIP process on the preceding print data ends, the CPU 201 ends processing.

A screen that is displayed when the setting value is received from the user will now be described. Fig. 5 is referred here.

Fig. 5 illustrates an example of the screen that is displayed when the setting value is received. The screen illustrated in Fig. 5 is displayed by the CPU 201 that serves as the display unit 303 and is an example of the screen on which the input of the setting value is received. The setting value is a value relevant to the number of the one or more RIP process mechanisms that are allocated to the RIP process on the interrupt print data. In some cases, the degree of the priority of the RIP process for the request of interrupt printing is determined in consideration of matters such as the deadline for the printed material and a relationship between a contractor and a contractee. The number of the one or more RIP process mechanisms that are allocated to the RIP process on the interrupt print data may be determined in consideration of various circumstances in a manner in which the input of the setting value is received from the user.

A dialog box 500 on which "Input of Interrupt Setting Value" is illustrated is displayed on the screen illustrated in Fig. 5. For example, the dialog box 500 may be a sub-screen that is displayed when the user inputs an interrupt printing instruction into the screen. In the dialog box 500, a character string "Total Degree of Parallelism: 12" is displayed. The degree of parallelism represents the number of one or more RIP process mechanisms that share print data. As the degree of parallelism regarding print data increases, RIP performance relevant to the print data increases. It may be thought that the RIP performance corresponds to a page count that enables the RIP process to be performed per unit time. The character string "Total Degree of Parallelism: 12" represents that the total number of the one or more RIP process mechanisms that share and perform the RIP process on the print data in parallel is 12.

In the dialog box 500, a character string "Degree of Parallelism of Interrupt Print RIP:" and an input box 501 are displayed side by side. The character string "Degree of Parallelism of Interrupt Print RIP:" represents the number of the one or more RIP process mechanisms that are allocated to the RIP process on the interrupt print data. In this example, "10" is inputted into the input box 501. A numeral that is inputted into the input box 501 is an example of a numeral that is received as the setting value relevant to the number of the one or more RIP process mechanisms that are allocated to the RIP process on the interrupt print data.

In the case where the setting value is received by using the screen illustrated in Fig. 5, the CPU 201 may refer the setting value at step S404. The CPU 201 serves as the allocation unit 302 and may determine at step S405 that the number of the one or more RIP process mechanisms that are allocated to the RIP process on the interrupt print data among twelve RIP process mechanisms is 10. The CPU 201 may thus determine that the setting value itself is the number of the one or more RIP process mechanisms that are allocated to the RIP process on the interrupt print data among the multiple RIP process mechanisms.

The allocation of the RIP process mechanisms to the RIP process on the interrupt print data and the preceding print data will now be described. Fig. 6 is referred here.

Fig. 6 illustrates an example of the information processing system 110 that allocates the RIP process mechanisms to the RIP process on the interrupt print data and the preceding print data. Fig. 6 illustrates the single RIP process mechanism 631 that is allocated to the continuation of the RIP process on the preceding print data 601 and the three RIP process mechanisms 632 to 634 that are allocated to the RIP process on the interrupt print data 602 among the four RIP process mechanisms 631 to 634 in the information processing system 110. In the case of such allocation at step S405, the RIP process mechanisms 632 to 634 share and perform the RIP process on the interrupt print data 602 in parallel until the RIP process on the interrupt print data 602 ends. The printed material that is printed by using the interrupt print data 602 on which the RIP process is performed may be discharged to a tray that differs from a tray for the printed material that is printed by using the preceding print data 601 on which the RIP process is performed.

After the RIP process on the interrupt print data 602 ends, the RIP process mechanisms 632 to 634 share the RIP process on the preceding print data 601 again at step S407.

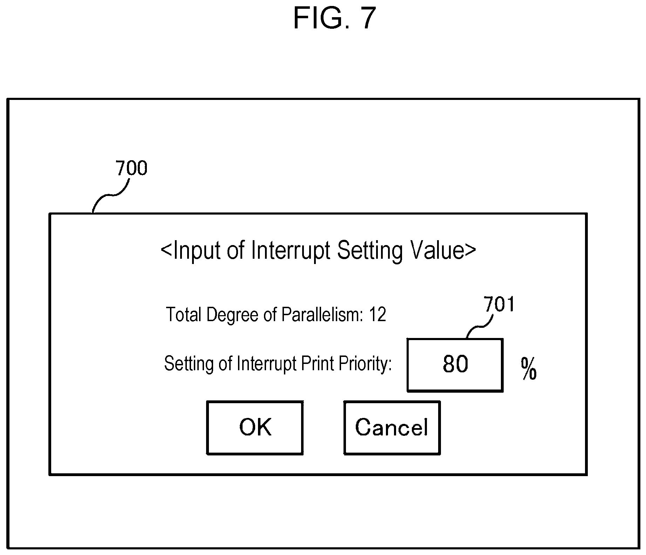

According to the exemplary embodiment described above, the CPU 201 serves as the display unit 303 and displays the screen on which the setting value is received, and the CPU 201 serves as the allocation unit 302, refers the setting value, and determines the number of the one or more RIP process mechanisms that are allocated to the RIP process on the interrupt print data. According to a modification, however, the CPU 201 serves as the display unit 303 and may display the screen on which the input of the priority of interrupt printing is received, and the CPU 201 serves as the allocation unit 302 and may determine the number of the one or more RIP process mechanisms that are allocated to the RIP process on the interrupt print data depending on the priority. Fig. 7 is referred here.

Fig. 7 illustrates an example of the screen that is displayed when the input of the priority is received. The screen illustrated in Fig. 7 is an example of the screen on which the CPU 201 that serves as the display unit 303 receives the input of the priority of interrupt printing. A dialog box 700 on which a character string "Input of Interrupt Setting Value" is illustrated is displayed on the screen illustrated in Fig. 7. For example, the dialog box 700 may be a sub-screen that is displayed when the user inputs the interrupt printing instruction on the screen. The character string "Total Degree of Parallelism: 12" is displayed on the dialog box 700. The character string "Total Degree of Parallelism: 12" represents that the total number of the one or more RIP process mechanisms that share and perform the RIP process on the print data in parallel is 12.

A character string "Setting of Interrupt Print Priority:", an input box 701, and a sign "%" are displayed on the dialog box 700. The "Setting of Interrupt Print Priority:" represents the proportion of the one or more RIP process mechanisms that are allocated to the RIP process on the interrupt print data to the multiple RIP process mechanisms. In this example, "80" is inputted into the input box. A numeral that is inputted into the input box is an example of a numeral that is received as the input of the priority of interrupt printing.

In the case where the priority is received on the screen illustrated in Fig. 7, the CPU 201 serves as the allocation unit 302 and may determine that 10 equal to about 80% of the number of the twelve RIP process mechanisms is the number of the one or more RIP process mechanisms that are allocated to the RIP process on the interrupt print data. Here, "10" is an example of the number of the one or more RIP process mechanisms that are allocated to the RIP process on the interrupt print data when the number is determined depending on the priority.

The CPU 201 thus serves as the allocation unit 302 and may determine that the proportion corresponding to the priority to the multiple RIP process mechanisms is the number of the one or more RIP process mechanisms that are allocated to the RIP process on the interrupt print data. In this example, the input of the proportion is received as the input of the priority, but the input of the priority may be a freely determined input that represents the priority. For example, the input of the priority may be an input that is selectable from low priority, intermediate priority, and high priority. For example, the input of the priority may be an input that is selectable from low priority, intermediate priority, and high priority each of which has designated proportion.

The priority may be intuitively inputted unlike the setting value that is inputted as a specific numeral.

### Second Exemplary Embodiment

In the case described according to the first exemplary embodiment, the CPU 201 refers the setting value and determines the number of the one or more RIP process mechanisms that are allocated to the RIP process on the interrupt print data. In the case described according to the second exemplary embodiment, the lower limit of the number of the other or more RIP process mechanisms that are allocated to the continuation of the RIP process on the preceding print data is determined in consideration of a predicted value of a page count when the RIP process on the preceding print data is performed per unit time and a predicted value of a page count when the preceding print data is printed per unit time. An example of a hardware configuration of the information processing system according to the second exemplary embodiment is the same as that according to the first exemplary embodiment, and the description thereof is omitted.

In some cases, the preceding print data is printed by performing a series of processes with no RIP-processed data temporarily stored in the spool. In these cases, there is a possibility that the allocation of the one or more RIP process mechanisms to the RIP process on the interrupt print data causes the performance of the RIP process on the preceding print data to lack in relation to printing performance, and printing is intermittent. A phenomenon in which printing is intermittent is called intermittent printing and may cause the productivity to be reduced. According to the second exemplary embodiment, the lower limit of the number of the other or more RIP process mechanisms that are allocated to the continuation of the RIP process on the preceding print data is determined in order to inhibit intermittent printing from occurring.

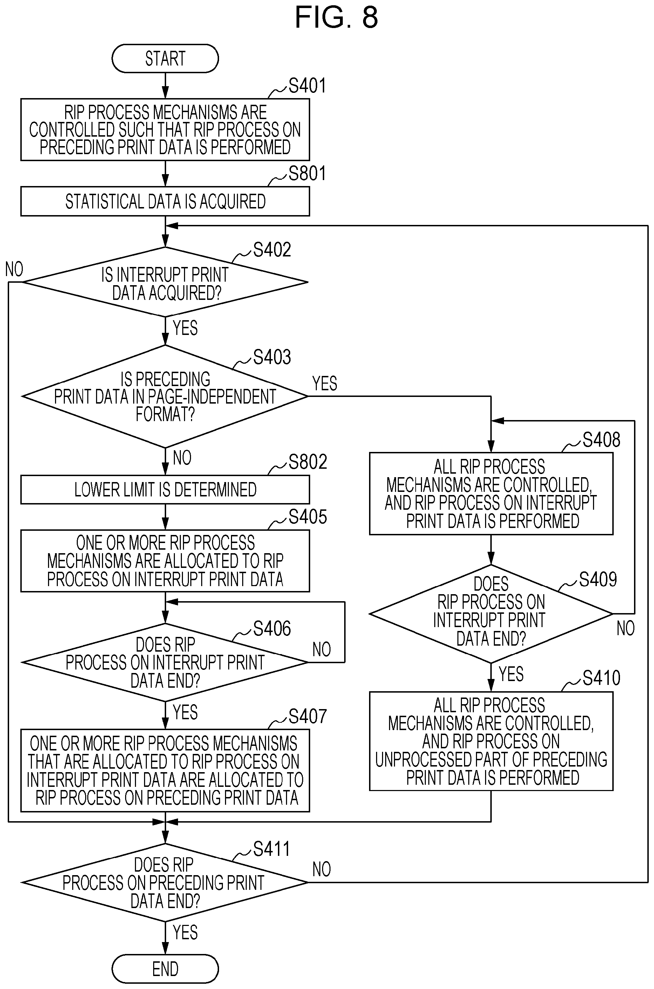

The flow of information processing that is performed by the information processing system according to the second exemplary embodiment will be described. Fig. 8 is referred here.

Fig. 8 illustrates an example of the flow of information processing that is performed by the information processing system 110 according to the second exemplary embodiment. The CPU 201 reads the information processing program from the ROM 202 or the storage 204 into the RAM 203 and runs the information processing program, and the present flow consequently proceeds. Steps like to those of the flow in Fig. 4 according to the first exemplary embodiment are designated by reference characters like to those of the flow in Fig. 4, steps that differ from those of the flow in Fig. 4 and the previous and subsequent steps will be described, and the description for the other like steps is omitted.

The present flow differs from the flow in Fig. 4 in including step S801 between step S401 and step S402 and step S802 instead of step S404 illustrated in Fig. 4.

The CPU 201 controls the RIP process mechanisms such that the RIP process on the preceding print data starts at step S401, and the CPU 201 serves as the allocation unit 302 and acquires statistical data relevant to the page count of the preceding print data on which the RIP process is performed per unit time at step S801. Examples of data that may be acquired include the page count when all of the RIP process mechanisms perform the RIP process on the preceding print data until the interrupt print data occurs, and a time that has elapsed after the RIP process starts.

At step S802, the CPU 201 serves as the allocation unit 302 and determines the lower limit of the number of the other or more RIP process mechanisms that are allocated to the continuation of the RIP process on the preceding print data such that the predicted value of the page count when the RIP process on the preceding print data is performed per unit time is not smaller than the predicted value of the page count when the preceding print data is printed per unit time. The predicted value of the page count when the RIP process on the preceding print data is performed per unit time may be a predicted value that is calculated based on the statistical data that is acquired at step S801. The predicted value of the page count when the preceding print data is printed per unit time may be a value that is calculated in advance. For example, the predicted value of the page count when the preceding print data is printed per unit time may be a value based on performance data of the print mechanism.

It is known that in the case where the RIP process on print data that has a large page count, for example, several tens of thousands pages such as a job for business forms is performed, the page processing performance of the RIP process mechanisms per page tends to be constant. As for the multi-page RIP method, it is known that the RIP performance of the multiple RIP process mechanisms as a whole is substantially proportional to the number of the RIP process mechanisms. In view of this, from the perspective of preventing intermittent printing, the number Ns of the one or more RIP process mechanisms to be allocated to the continuation of the RIP process on the preceding print data may be expressed as Ns > Pp / Pr, where Pr (unit: [page/min]) is the RIP performance of the RIP process mechanisms, and Pp (unit: [page/min]) is the printing performance of the print mechanism.

For example, the CPU 201 may determine that the lower limit of the number of the other or more RIP process mechanisms that are allocated to the continuation of the RIP process on the preceding print data is the minimum integer of Ns that satisfies Ns > Pp / Pr. Specifically, when the RIP performance Pr of the RIP process mechanisms is 80 page/min, and the printing performance Pp of the print mechanism is 384 page/min, Ns > 384 / 80 is satisfied. That is, Ns > 4.8 is satisfied. In this case, the CPU 201 may determine that the lower limit of the number of the other or more RIP process mechanisms that are allocated to the continuation of the RIP process on the preceding print data is 5 equal to the minimum integer of Ns that satisfies Ns > 4.8.

The CPU 201 serves as the allocation unit 302 and may determine the upper limit of the number of the one or more of the RIP process mechanisms that are allocated to the RIP process on the interrupt print data such that the predicted value of the page count when the RIP process on the preceding print data is performed per unit time is not smaller than the predicted value of the page count when the preceding print data is printed per unit time.

For example, the CPU 201 may calculate a value acquired by subtracting the minimum integer of Ns that satisfies Ns > Pp / Pr from the total number of the RIP process mechanisms as the upper limit of the number of the one or more of the RIP process mechanisms that are allocated to the RIP process on the interrupt print data. Specifically, in the case where the total number of the RIP process mechanisms is 12, and the minimum integer of Ns that satisfies Ns > Pp / Pr is 5, the upper limit of the number of the one or more of the RIP process mechanisms that are allocated to the RIP process on the interrupt print data may be 7 acquired by subtracting 5 from 12.

### Third Exemplary Embodiment

According to a third exemplary embodiment, in the case where the page count of the interrupt print data is smaller than the number of the RIP process mechanisms, it is determined that the number of the one or more RIP process mechanisms that are allocated to the RIP process on the interrupt print data is equal to or smaller than the page count of the interrupt print data. An example of a hardware configuration of the information processing system according to the third exemplary embodiment is the same as that according to the first exemplary embodiment, and the description thereof is omitted.

In some cases, the page count of the interrupt print data is smaller than the number of the RIP process mechanisms. For example, the page count of the interrupt print data is a small page count such as two pages in relation to the four RIP process mechanisms in some cases. It is thought that the number of the one or more RIP process mechanisms that are allocated to the RIP process on the interrupt print data does not need to be larger than the page count of the interrupt print data. If one or more RIP process mechanisms are unnecessarily allocated to the RIP process on the interrupt print data, and the number of the one or more RIP process mechanisms that are allocated to the RIP process on the preceding print data decreases, the RIP performance relevant to the preceding print data is unnecessarily reduced. From this perspective, according to the third exemplary embodiment, the number of the one or more RIP process mechanisms that are allocated to the RIP process on the interrupt print data is equal to or smaller than the page count of the interrupt print data.

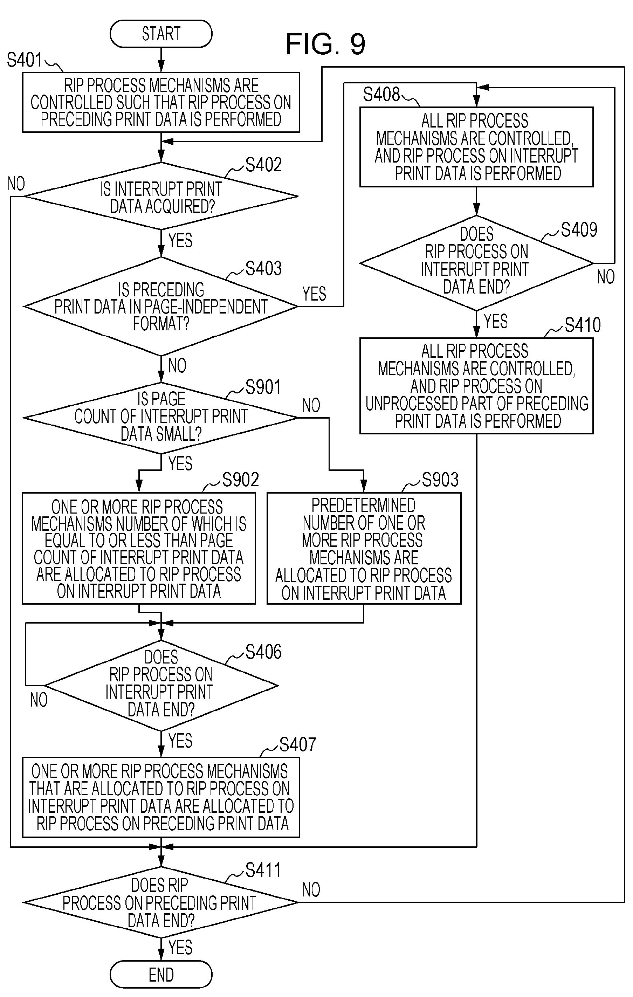

The flow of information processing that is performed by the information processing system according to the third exemplary embodiment will be described with reference to Fig. 9.

Fig. 9 illustrates an example of the flow of information processing that is performed by the information processing system 110 according to the third exemplary embodiment. The CPU 201 reads the information processing program from the ROM 202 or the storage 204 into the RAM 203 and runs the information processing program, and the present flow consequently proceeds. Steps like to those of the flow in Fig. 4 according to the first exemplary embodiment are designated by reference characters like to those of the flow in Fig. 4, steps that differ from those of the flow in Fig. 4 and the previous and subsequent steps will be described, and the description for the other like steps is omitted. The present flow differs from the flow in Fig. 4 in including steps S901 to 903 instead of the step S404 and step S405.

At step S901, the CPU 201 serves as the allocation unit 302 and determines whether the page count of the interrupt print data is smaller than a predetermined number of one or more RIP process mechanisms. The predetermined number of the one or more RIP process mechanisms may be the total number of the RIP process mechanisms or the number of one or more RIP process mechanisms that are temporarily allocated to the RIP process on the interrupt print data. The number of the one or more RIP process mechanisms that are temporarily allocated to the RIP process on the interrupt print data may be determined based on, for example, the setting value, the priority, the upper limit, or the lower limit described above.

For example, at the present step, the CPU 201 serves as the allocation unit 302 and may determine whether the page count of the interrupt print data is smaller than the number of the one or more of the RIP process mechanisms to be allocated to the RIP process on the interrupt print data that is temporarily set depending on the setting value.

In the case where it is determined that the page count of the interrupt print data is smaller than the predetermined number of the one or more RIP process mechanisms, the CPU 201 performs a process at step S902. In the case where it is not determined that the page count of the interrupt print data is smaller than the predetermined number of the one or more RIP process mechanisms, the CPU 201 performs a process at step S903.

At step S902, the CPU 201 serves as the allocation unit 302 and determines that the number of the one or more of the RIP process mechanisms that are allocated to the RIP process on the interrupt print data is equal to or smaller than the page count of the interrupt print data. That is, the CPU 201 serves as the allocation unit 302, allocates the one or more RIP process mechanisms the number of which is equal to or smaller than the page count of the interrupt print data to the RIP process on the interrupt print data, and allocates the other or more RIP process mechanisms to the continuation of the RIP process on the preceding print data. For example, when the page count of the interrupt print data is 3 pages, and the predetermined number of the one or more RIP process mechanisms is 5, the CPU 201 may allocate three RIP process mechanisms to the RIP process on the interrupt print data instead of five RIP process mechanisms.

At step S903, the CPU 201 serves as the allocation unit 302 and allocates the predetermined number of the one or more RIP process mechanisms among the multiple RIP process mechanisms that share the RIP process on the preceding print data in parallel to the RIP process on the interrupt print data and allocates the other or more RIP process mechanisms to the continuation of the RIP process on the preceding print data. The predetermined number may be a value that is determined based on the setting value, the priority, the upper limit, or the lower limit described above within the total number of the RIP process mechanisms. The predetermined number described herein may be the number of the one or more RIP process mechanisms that are temporarily allocated to the RIP process on the interrupt print data as described above. For example, when the page count of the interrupt print data is 10 pages, and the total number of the RIP process mechanisms is 5, the CPU 201 may allocate two RIP process mechanisms the number of which is equal to the setting value to the RIP process on the interrupt print data and may allocate three RIP process mechanisms to the continuation of the RIP process on the preceding print data.

An information processing system described as a comparative example to the technique of the disclosure suspends the RIP process on the preceding print data that precedingly starts and performs the RIP process on the interrupt print data.

Fig. 10 illustrates an example of an information processing system 1010 in the comparative example that suspends the RIP process on the preceding print data that precedingly starts and that performs the RIP process on the interrupt print data.

Fig. 10 illustrates a scene where the information processing system 1010 stops the RIP process on preceding print data 1011, and four RIP process mechanisms 1031 to 1034 share the RIP process on interrupt print data 1012 in parallel. The preceding print data 1011 is the data in the non-page-independent format.

In the case where the information processing system 1010 acquires the interrupt print data 1012 while the four RIP process mechanisms 1031 to 1034 perform the RIP process on the preceding print data 1011, the four RIP process mechanisms 1031 to 1034 suspend the RIP process on the preceding print data 1011 and perform the RIP process on the interrupt print data 1012. After the RIP process on the interrupt print data 1012 ends, the four RIP process mechanisms 1031 to 1034 resume and share the RIP process on the preceding print data 1011 again. When the process on the preceding print data 1011 is resumed, all of the RIP process mechanisms each perform a predetermined process from the first page to a desired page.

Referring to Fig. 6, as for the information processing system 110, the RIP process mechanism 631 among the four RIP process mechanisms 631 to 634 is allocated to the continuation of the RIP process on the preceding print data 601, and the three RIP process mechanisms 632 to 634 are allocated to the RIP process on the interrupt print data 602. As for the information processing system 1010 illustrated in Fig. 10, however, the four RIP process mechanisms 1031 to 1034 perform the RIP process on the interrupt print data 1012.

While the RIP process on the interrupt print data is performed, the single RIP process mechanism continues the RIP process on the preceding print data in an example in Fig. 6, but no RIP process mechanism continues a preceding job in an example in Fig. 10. After the process on the interrupt print data ends, the three RIP process mechanisms perform the predetermined process for resuming the RIP process on the preceding print data in example in Fig. 6, but the four RIP process mechanisms perform the predetermined process for resuming the RIP process on the preceding print data in the example in Fig. 10.

In the example in Fig. 6 as described above, it is possible that a time required for the RIP process on the interrupt print data is longer than that in the example in Fig. 10, but the RIP-processed page count of the preceding print data may be continuously increased by one or more RIP process mechanisms, and the time required for resuming the RIP process on the preceding print data may be reduced. The reduction in the productivity relevant to the RIP process on the preceding print data may be mitigated by using the technique according to the disclosure.

The exemplary embodiments are described above by way of example. The exemplary embodiments described above may be modified or used in various ways.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system includes:
   a processor configured to:
   determine whether preceding print data on which a RIP process precedingly starts is data in a page-independent format in a case where interrupt print data is acquired; and
   allocate one or more RIP process mechanisms among a plurality of RIP process mechanisms that share the RIP process on the preceding print data in parallel to a RIP process on the interrupt print data and allocate another or more RIP process mechanisms among the plurality of RIP process mechanisms to continuation of the RIP process on the preceding print data in a case where the preceding print data is not the data in the page-independent format.
(((2))) As for the information processing system described in (((1))),
   the processor is configured to:
   display a screen on which a setting value relevant to a number of the one or more RIP process mechanisms that are allocated to the RIP process on the interrupt print data is received; and
   refer to the setting value and determine the number of the one or more RIP process mechanisms that are allocated to the RIP process on the interrupt print data among the plurality of RIP process mechanisms.
(((3))) As for the information processing system described in (((1))),
   the processor is configured to:
   display a screen on which an input of a priority of interrupt printing is received; and
   determine a number of the one or more RIP process mechanisms that are allocated to the RIP process on the interrupt print data depending on the priority.
(((4))) As for the information processing system described in (((1))),
   the processor is configured to:
   determine a lower limit of a number of the other or more RIP process mechanisms that are allocated to the continuation of the RIP process on the preceding print data such that a predicted value of a page count when the RIP process on the preceding print data is performed per unit time is not smaller than a predicted value of a page count when the preceding print data is printed per unit time; and
   determine a number of the one or more RIP process mechanisms that are allocated to the RIP process on the interrupt print data.
(((5))) As for the information processing system described in any one of (((2))) to (((4))),
   the processor is configured to:
   determine that the number of the one or more RIP process mechanisms that are allocated to the RIP process on the interrupt print data is a number equal to or smaller than a page count of the interrupt print data in a case where the page count of the interrupt print data is smaller than a number of the plurality of RIP process mechanisms.
(((6))) As for the information processing system described in any one of (((1))) to (((5))),
   the processor is configured to:
   allocate the one or more RIP process mechanisms that are allocated to the RIP process on the interrupt print data to the continuation of the RIP process on the preceding print data in a case where the RIP process on the interrupt print data ends.
(((7))) An information processing program causes a computer to execute a process includes:
   determining whether preceding print data on which a RIP process precedingly starts is data in a page-independent format in a case where interrupt print data is acquired; and
   allocating one or more RIP process mechanisms among a plurality of RIP process mechanisms that share the RIP process on the preceding print data in parallel to a RIP process on the interrupt print data and allocating another or more RIP process mechanisms among the plurality of RIP process mechanisms to continuation of the RIP process on the preceding print data in a case where the preceding print data is not the data in the page-independent format.

As for the information processing system according to (((1))) and the information processing program according to (((7))), a reduction in productivity due to the RIP process on the interrupt print data that is performed during the RIP process on the preceding print data can be mitigated unlike the case where the RIP process on the preceding print data is suspended, and the RIP process on the interrupt print data is performed.

As for the information processing system according to (((2))), the RIP process on the interrupt print data can be performed by one or more RIP process mechanisms the number of which depends on the received setting value.

As for the information processing system according to (((3))), the RIP process on the interrupt print data can be performed by one or more RIP process mechanisms the number of which depends on the priority of interrupt printing that can be intuitively inputted.

As for the information processing system according to (((4))), intermittent printing can be inhibited from occurring in the case where a RIP process on print data and a print process are performed as a series of processes.

As for the information processing system according to (((5))), the number of the one or more RIP process mechanisms that are allocated to the RIP process on the interrupt print data can be equal to or smaller than the page count of the interrupt print data.

As for the information processing system according to (((6))), the RIP process on the preceding print data can be shared and performed by an increased number of RIP process mechanisms after the RIP process on the interrupt print data ends unlike the case where the one or more RIP process mechanisms that are allocated to the RIP process on the interrupt print data are not allocated to the continuation of the RIP process on the preceding print data.

## Claims

1. An information processing system comprising:
a processor,
the processor is configured to:
determine whether preceding print data on which a RIP process precedingly starts is data in a page-independent format in a case where interrupt print data is acquired; and
allocate one or more RIP process mechanisms among a plurality of RIP process mechanisms that share the RIP process on the preceding print data in parallel to a RIP process on the interrupt print data and allocate another or more RIP process mechanisms among the plurality of RIP process mechanisms to continuation of the RIP process on the preceding print data in a case where the preceding print data is not the data in the page-independent format.

2. The information processing system according to claim 1,
wherein the processor is configured to:
display a screen on which a setting value relevant to a number of the one or more RIP process mechanisms that are allocated to the RIP process on the interrupt print data is received; and
refer to the setting value and determine the number of the one or more RIP process mechanisms that are allocated to the RIP process on the interrupt print data among the plurality of RIP process mechanisms.

3. The information processing system according to claim 1,
wherein the processor is configured to:
display a screen on which an input of a priority of interrupt printing is received; and
determine a number of the one or more RIP process mechanisms that are allocated to the RIP process on the interrupt print data depending on the priority.

4. The information processing system according to claim 1,
wherein the processor is configured to:
determine a lower limit of a number of the other or more RIP process mechanisms that are allocated to the continuation of the RIP process on the preceding print data such that a predicted value of a page count when the RIP process on the preceding print data is performed per unit time is not smaller than a predicted value of a page count when the preceding print data is printed per unit time; and
determine a number of the one or more RIP process mechanisms that are allocated to the RIP process on the interrupt print data.

5. The information processing system according to any one of claim 2 to claim 4, wherein the processor is configured to:
determine that the number of the one or more RIP process mechanisms that are allocated to the RIP process on the interrupt print data is a number equal to or smaller than a page count of the interrupt print data in a case where the page count of the interrupt print data is smaller than a number of the plurality of RIP process mechanisms.

6. The information processing system according to any one of claim 1 to claim 5, wherein the processor is configured to:
allocate the one or more RIP process mechanisms that are allocated to the RIP process on the interrupt print data to the continuation of the RIP process on the preceding print data in a case where the RIP process on the interrupt print data ends.

7. An information processing program causing a computer to execute a process comprising:
determining whether preceding print data on which a RIP process precedingly starts is data in a page-independent format in a case where interrupt print data is acquired; and
allocating one or more RIP process mechanisms among a plurality of RIP process mechanisms that share the RIP process on the preceding print data in parallel to a RIP process on the interrupt print data and allocating another or more RIP process mechanisms among the plurality of RIP process mechanisms to continuation of the RIP process on the preceding print data in a case where the preceding print data is not the data in the page-independent format.

8. A method comprising:
determining whether preceding print data on which a RIP process precedingly starts is data in a page-independent format in a case where interrupt print data is acquired; and
allocating one or more RIP process mechanisms among a plurality of RIP process mechanisms that share the RIP process on the preceding print data in parallel to a RIP process on the interrupt print data and allocating another or more RIP process mechanisms among the plurality of RIP process mechanisms to continuation of the RIP process on the preceding print data in a case where the preceding print data is not the data in the page-independent format.
